# EUROPEAN PATENT SPECIFICATION

(11) **EP 0 485 817 B1**
(45) Date of publication and mention of the grant of the patent: **15.04.1998**
(21) Application number: 91118666.6
(22) Date of filing: 31.10.1991
(51) Int. Cl.: G01N 15/02

(54) **Apparatus for measuring a particle size distribution**
Gerät zur Messung der Teilchengrössenverteilung
Appareil pour mesurer la distribution de tailles de particules

(30) Priority: 03.11.1990 JP 297869/90; 17.11.1990 JP 312251/90
(43) Date of publication of application: 20.05.1992
(73) Proprietor: HORIBA, LTD., Minami-ku Kyoto (JP)
(72) Inventor: Igushi, Tatsuo, Kyoto (JP); Togawa, Yoshiaki, Kyoto (JP)
(74) Representative: Müller, Frithjof E., Dipl.-Ing.

(56) References cited:
- EP-A- 0 281 077
- EP-A- 0 324 413
- EP-A- 0 434 352
- EP-A- 0 447 991
- WO-A-90/10215
- GB-A- 2 203 542
- JP-A-02 173 550
- INTERNATIONAL LABORATORY. vol. 16, no. 2, March 1986, FAIRFIELD CT US pages 24 - 32; K. OKA ET AL.: 'Microparticle sizing by dynamic light scattering'
- INTERNATIONAL LABORATORY. vol. 17, no. 7, September 1987, SHELTON CT US pages 28 - 36; J. CORNILLAULT: 'High resolution submicron measurements with a laser particle size analyzer'
- P.Horowitz and W.Hill: THE ART OF ELECTRONICS, Cambridge University Press, New York, 1989, pp.143

## Description

### Field of the Invention

The present invention relates to an apparatus for measuring a particle size distribution as claimed in the preamble of claim 1. Moreover, the invention relates to an apparatus in which a particle size distribution of sample particles is measured by utilizing a diffraction phenomenon or a scattering phenomenon brought about by irradiating dispersed particles with a light.

### Description of the Prior Art

With an apparatus for measuring a particle size distribution utilizing a diffraction phenomenon or a scattering phenomenon of a light by particles, an intensity distribution of a diffracted light or scattered light, in short a relation between an intensity of light and a diffraction angle or scattering angle, is measured and then the resulting relation is subjected to an operation based on the theory of the Fraunhofer diffraction or the Mie scattering to calculate a particle size distribution of sample particles.

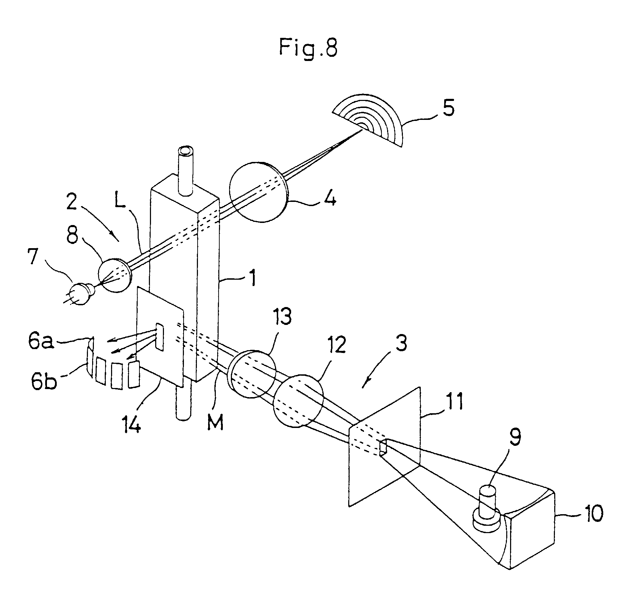

Fig. 8 is a perspective view showing the conventional example of an apparatus for measuring a particle size distribution of this type (JP-A-2-173 550).

Referring to Fig. 8, a flow cell 1 is a transparent vessel through which a medium with sample particles dispersed therein flows. Said flow cell 1 is irradiated with parallel laser beams L from a laser optical system 2.

Separately from said parallel laser beams L, the flow cell 1 is irradiated with single wavelength beams M from a single wavelength optical system 3.

The laser beams L, which have been diffracted or scattered by said sample particles within the flow cell 1, are incident upon a ring shaped photosensor array 5 through a Fourier transformation lens 4 to determine a particle size distribution of the sample particles having relatively larger particle diameters from a distribution of a light to be measured in intensity.

In addition, said single wavelength beams M, which have been diffracted or scattered by the sample particles in the same manner, are incident upon a plurality of photosensors 6a, 6b - - -, which are arranged at positions exhibiting scattering angles different to each other relatively to the flow cell 1, to determine a particle size distribution of the sample particles having relatively smaller particle diameters from a distribution of a light to be measured in intensity.

In addition, referring to Fig. 8 again, reference numeral 7 designates a laser diode, reference numeral 8 designates a collimator lens, reference numeral 9 designates a light source, reference numeral 10 designates a spherical mirror, reference numeral 12 designates a collecting lens, reference numeral 13 designates an interference filter, and reference numeral 14 designates a light-measuring slit.

With the above described apparatus for measuring a particle size distribution, the laser beams L from said laser optical system 2 and the monochrome beams M from said optical system 3 are incident upon the same flow cell 1 to make the laser beams, which have been diffracted or scattered by the sample particles within the flow cell 1, incident upon said ring shaped photosensor array 5, whereby measuring said optical intensity distribution, and simultaneously make the monochrome beams M, which have been diffracted or scattered by the same sample particles, incident upon a plurality of photosensors 6a, 6b - - -, whereby measuring the optical intensity, so that said particle size distribution of the sample particles having relatively larger particle diameters is measured from the measurement by the laser beams L while said particle size distribution of the sample particles having relatively smaller particle diameters is measured from the measurement by the monochrome beams M. Accordingly, an advantage occurs in that the particle size distribution ranging from the smaller particle diameters to the larger particle diameters can be measured by means of a single apparatus.

However, in the above described conventional apparatus for measuring a particle size distribution, if a concentration of sample particles flowing through the flow cell 1 is changed, also the optical intensity measured by means of the ring shaped photosensor array 5 and a plurality of photosensors 6a, 6b - - - is changed depending upon a change of said concentration of sample particles.

That is to say, there is a tendency that the light beams which have been diffracted or scattered by the sample particles, are more strongly influenced by a multiple scattering with an increase of the concentration of sample particles and thus the optical intensity received by the ring shaped photosensor array 5 and the photosensors 6a, 6b - - - is reduced so much as that.

In particular, in the case where the particles have diameters of submicron order, said multiple scattering is changed in extent depending upon the wavelength of the irradiated beams, so that an influence of the multiple scattering upon the optical intensity of the laser beams measured by means of the ring shaped photosensor array 5 is different from that upon the optical intensity of the monochrome beams measured by means of a plurality of photosensors 6a, 6b - - - in extent. As mentioned above, in case of the conventional apparatus for measuring a particle size distribution, the influence of the concentration of sample particles upon measured results has not been taken into consideration, so that problems have occurred in that said measured results are different depending upon the concentration of sample particles flowing through the flow cell 1 even though the sample particles have the same particle size distribution.

In addition, in case of the above described conventional apparatus for measuring a particle size distribution, if a quantity of laser beams emitted from said laser diode 7 and said light source 9, which is a light source of the laser optical system 2 and the single wavelength optical system 3, respectively, is fluctuated, also a quantity of light received by the ring shaped photosensor array 5 and the photosensors 6a, 6b - - - is dependently fluctuated,but no measure is taken as for an influence of said fluctuation of said quantity of light emitted from said light sources upon the quantity of light scattered, so that a problem has occurred in that the particle size distribution can not be accurately determined.

A further known apparatus for measuring a particle size distribution (W090/10215) comprises a laser light source for generating a parallel laser light beam 12 irradiating a sample cell, a lens focusing the laser light beams transmitted through the sample cell on a photodetector array having a ring-shaped structure. A mirror provided at the center of the photodetector array reflects the unscattered portion of the beam passed out of the sample cell to a further photodetector for monitoring the power of the unscattered beam.

Conventional light scattering theories can be applied to an intensity-angle-profile of scattered light obtained by this apparatus to determine the approximate particle size distribution in the sample cell.

Another apparatus known from W090/10215, too, includes a projector for generating a light beam 212 irradiating a sample cell. A transmitted light beam is focused on a photodetector the output of which is connected to a microprocessor. Several photodetectors are arranged to detect light scattered in different lateral directions with regard to the optical axis of the projector. The outputs of these detectors are connected to the microprocessor, too.

Furthermore, an known apparatus with a laser for generating a laser beam for irradiating sample cell comprises a half mirror disposed in the optical path of the laser beam for monitoring the light intensity thereof by a photocell (INTERNATIONAL LABORATORY, vol. 16, no. 2, March 1986, FAIRFIELD CT US, pages 24 - 32; K. Oka et al.: "Microparticle sizing ...").

A particle size analyzer comprises a half reflecting mirror and a photodiode for monitoring a laser light beam which irradiates a sample cell. (INTERNATIONAL LABORATORY, vol. 17, no. 7, September 1987, SHELTON CT US, pages 28 - 36; Cornillault: "High resolution submicron ...")

### SUMMARY OF THE INVENTION

It is the object of the present invention to provide an apparatus for measuring a particle size distribution which is capable of accurately measuring a particle size distribution without being influenced by fluctuation of quantity of light emitted from a light source.

In order to satisfy this object an apparatus according to the preamble of claim 1 is provided with the characterizing features thereof.

The apparatus according to the present invention is capable to accurately measure a wide range of particle size distribution ranging from the smaller particle diameters to the larger particle diameters at a single stroke due to the multiplexer serving as a data input means.

According to the above described construction, the data measured by means of the ring shaped detector for measuring said optical intensities of said laser beams diffracted or scattered by the sample particles and the data measured by means of the group of photosensors for measuring said optical intensities of said monochrome light are compensated by means of said compensating means by a quantity corresponding to an optical quantity of the laser.

### BRIEF DESCRIPTION OF THE DRAWINGS

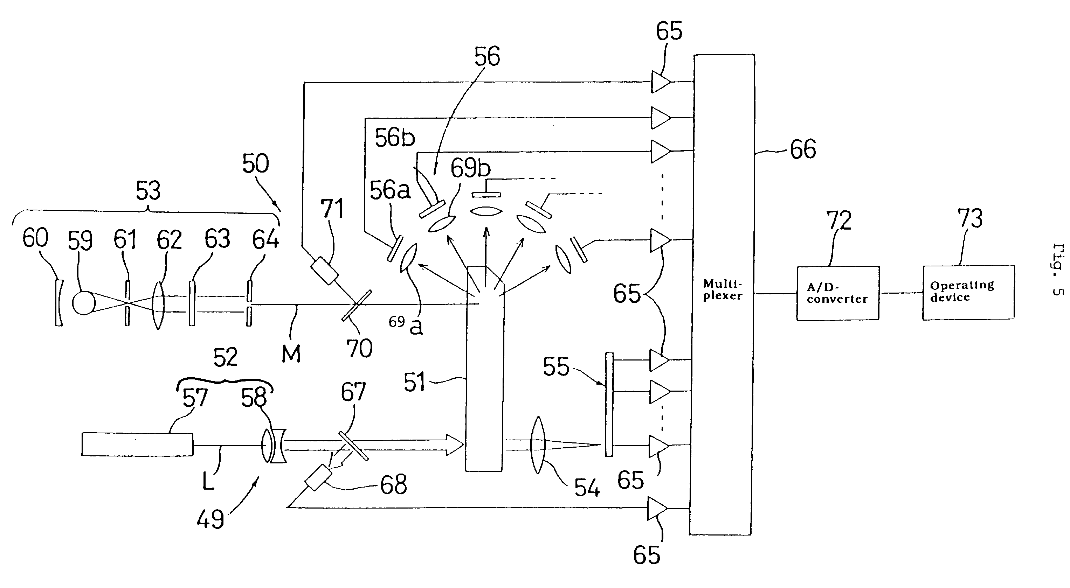

Preferred embodiments of the invention are shown in Figs. 5 to 8; Figs. 1-4 being deleted.
Fig. 5 is a diagram schematically showing an outline of an apparatus of an embodiment for measuring a particle size distribution;
Fig. 6 is a perspective view showing a ring shaped detector used in said apparatus of Fig. 5 for measuring a particle size distribution;
Fig. 7 is a flow chart showing a measuring operation in the apparatus of Fig. 5 for measuring a particle size distribution; and
Fig. 8 is a perspective view showing a construction of the conventional apparatus for measuring a particle size distribution.

### DESCRIPTION OF THE PREFERRED EMBODIMENTS

The preferred embodiments of the present invention will be below described with reference to the drawings.

Fig. 5 is a diagram showing an optical measuring system in an apparatus for measuring a particle size distribution according to the invention.

Referring to Fig. 5, a sample cell 51 is a transparent vessel housing a sample liquid with sample particles dispersed in a medium therein and laser beam-emitting means 52 is an optical system for irradiating said sample cell 51 with parallel laser beams L.

Said laser beam-emitting means 52 is composed of a laser beam source 57 for emitting said parallel laser beams L, a beam expander 58 for expanding a bundle of laser beams L and the like.

A collecting lens 54 for collecting the laser beams L diffracted or scattered by said sample particles on a ring shaped detector 55 is arranged on an optical axis of the laser beam-emitting means 52 in front of the sample cell 51.

Said ring shaped detector 55 is arranged in front of said collecting lens 54 for receiving the laser beams having relatively smaller scattering angles of the laser beams L diffracted or scattered by the sample particles to measure their optical intensities.

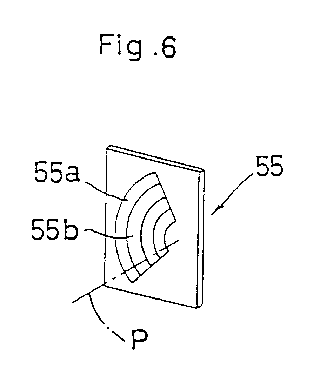

Fig. 6 is a perspective view showing a construction of the ring shaped detector 55. This ring shaped detector 55 is composed of a plurality of scattered beam photosensors 55a, 55b - - - arranged so as to be divided in a ring shape with said optical axis P of the laser beam-emitting means 52 as a center for detecting the laser beams L diffracted or scattered by the sample particles at the respective angles depending upon particle diameters of the sample particles.

Said respective photosensors 55a, 55b - - - of the ring shaped detector 55 are connected with a multiplexer 66 through amplifiers 65 - - - corresponding thereto.

The laser beam-emitting means 52, the collecting lens 54 and the ring shaped detector 55 compose a larger diameter particle-detecting optical system 49 for receiving the laser beams diffracted or scattered by the sample particles having relatively larger particle diameters.

A first beam-splitter 67 composed of a half mirror and the like for separating a part of the laser beams L irradiated through said expander 58 is disposed on said optical axis of the laser beam-emitting means 52 between the beam expander 58 and the sample cell 51 so that a part of the laser beams L separated by means of said beam-splitter 67 may be received by a first monitor photosensor 68. Also said monitor photosensor 68 is connected with said multiplexer 66 through the corresponding amplifier 65.

On the other hand, monochrome light-emitting means 53 is an optical system for irradiating the sample cell 51 with monochrome light M having wavelengths shorter than those of the laser beams L and composed of a lamp light source 59, a spherical mirror 60, apertures 61, 64, a collimator lens 62, an interference filter 63 and the like.

Said spherical mirror 60 is a mirror for collecting a light emitted backward from said lamp light source 59 on said aperture 61 arranged in front of the lamp light source 59. The aperture 61 contracts said light from the lamp light source 59 to form a sufficiently small bundle of beams.

Said collimator lens 62 arranged in front of the aperture 61 is a lens for turning the lamp light, which has been contracted by means of the aperture 61, into parallel beams. Said interference filter 63 arranged in front of the collimator lens 62 is a filter for taking out merely beams M having an appointed monochrome from said parallel beams.

Said aperture 64 arranged in front of the interference filter 63 aims at a contraction of a bundle of the monochrome beams M from the interference filter 63. The monochrome beams M, which have passed through the aperture 64, are incident upon a position different from the incident position of the laser beams L of the sample cell 51.

In addition, a plurality of photosensors 56a, 56b - - - composing a group of photosensors 56 for individually detecting the monochrome beams M having relatively large scattering angles are arranged at the respective scattering angle positions. In particular, here, said photosensors 56a, 56b - - - are arranged not only on the side in rear of the sample cell 51, in short the side on which the single wavelength-emitting means 53 is arranged, but also on the side in front of the sample cell 51 to measure an optical intensity also as for the monochrome beams M scattered ahead the sample cell 51.

The respective photosensors 56a, 56b - - - receive the respective diffracted or scattered beams collected by means of collecting lenses 69a, 69b - - - corresponding thereto. The photosensors 56a, 56b - - - are connected with said multiplexer 66 through amplifiers 65 corresponding thereto.

The above described monochrome light-emitting means 53, group of photosensors 56 and collecting lenses 69a, 69b ---compose a smaller diameter particle-detecting optical system 50 for receiving the monochrome lights diffracted or scattered by the sample particles having relatively smaller particle diameters.

In addition, a second beam-splitter 70 composed of a half mirror and the like for separating a part of the monochrome beams M irradiated through said aperture 64 is disposed on said optical axis of the monochrome beam-emitting means 53 between the aperture 64 and the sample cell 51 so that a part of the monochrome beams M separated by means of said beam-splitter 70 may be received by a second monitor photosensor 71. Also said monitor photosensor 71 is connected with said multiplexer 66 through the corresponding amplifier 65.

Said multiplexer 66 is a circuit having a function of taking in data of an optical intensity detected by means of the respective photosensors 55a, 55b - - - of the ring-like detector 55, data detected by means of the respective photosensors 56a, 56b - - - of the group of photosensors 56 and data detected by means of the monitor photosensors 68, 71 in an appointed order and converting the taken-in data into series signals in the taking-in order to send them to an A/D convertor 72 on the following stage.

Said A/D convertor 72 is a circuit for converting the sent data of measurement, in short analog data, into digital data and said digital data are sent to an operating device 73 on the following stage.

Said operating device 73 is a device for conducting an operation of determining a particle size distribution of the sample particles within the sample cell 51 on the basis of the sent digital data about an optical intensity and composed of a computer and the like. This operation determines said particle size distibution on the basis of the theory of the Fraunhofer diffraction or the Mie scattering but here also a compensating function for compensating input data used for the operation prior to the determination of the particle size distribution is added.

That is to say, said compensation in this case compensates the data of an optical intensity detected by means of the photosensors 55a, 55b - - -, 56a, 56b - - - on the basis of the data of the laser beams L and the monochrome beams M measured by means of the respective monitor photosensors 68, 71 at a point of time when the diffracted beams or the scattered beams are received by the respective photosensors 55a, 55b - - -, 56a, 56b - - -. The data measured by the photosensors 55a, 55b - - - receiving the diffracted beams or the scattered beams of the laser beams L are compensated on the basis of the data detected by means of the monitor photosensor 68 and the data measured by the photosensors 56a, 56b - - - receiving the diffracted beams or the scattered beams of the monochrome beams M are compensated on the basis of the data detected by means of the monitor photosensor 71, respectively.

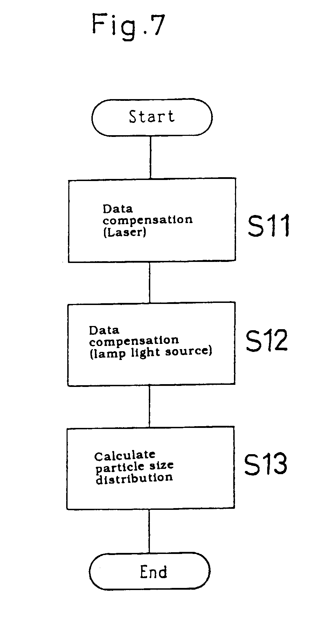

Fig. 7 is a flow chart showing an outline of the operation conducted in the operating device 73.

The measuring procedures of the particle size distribution in the apparatus for measuring a particle size distribution will be below described with reference also to a flow chart shown in Fig. 7.

In the optical system composing the laser beam-emitting means 52, the laser beams L from the laser light source 57 are expanded in bundle of beams by means the beam expander 58 and a part of them transmits through the first beam-splitter 67 to be incident upon the sample cell 51.

The laser beams L are diffracted or scattered by the sample particles within the sample cell 51 and the diffracted beams or the scattered beams are focused into an image on the ring shaped detector 55 by means of the collecting lens 54.

An optical intensity of the laser beams L diffracted or scattered by the sample particles is measured by means of the photosensors 55a, 55b - - - arranged in the ring shaped detector 55. Of the respective photosensors 55a, 55b - - -, the photosensors on the outer circumferential side receive the laser beams L scattered at larger scattering angles while the photosensors on the inner circumferential side receive the laser beams L scattered at smaller scattering angles. Accordingly, said optical intensity detected by means of the photosensors on the outer circumferential side reflects a quantity of the sample particles having larger particle diameters while said optical intensity detected by means of the photosensors on the inner circumferential side reflects a quantity of the sample particles having smaller particle diameters.

In addition, a part of the laser beams L coming out from the beam expander 58 and separated by means of the first beam-splitter 67 is received by the first monitor photosensor 68.

The optical intensities detected by means of the respective photosensors 55a, 55b - - -, 68 are converted into analog electric signals and put in the multiplexer 66 through the amplifiers 65.

On the other hand, in the optical system composing the monochrome beam-emitting means 53, the lamp light from the lamp light source 59 is turned into parallel beams by means of the collimator lens 62 through the aperture 61 and said parallel beams are turned into the monochrome beams M by means of the interference filter 63. In addition, the monochrome beams M are contracted in bundle of beams by means of the aperture 64 and then a part of them is incident upon the sample cell 51.

The monochrome beams M are diffracted or scattered by the sample particles within the sample cell 51 and the scattered beams are collected by means of the respective corresponding photosensors 56a, 56b - - - through the respective collecting lenses 69a, 69b - - - followed by measuring the optical intensity distribution by means of the group of photosensors 56.

In the group of photosensors 56, the photosensors arranged closer to the rear of the sample cell 51 receive the monochrome beams M having larger scattering angles while the photosensors arranged closer to the front of the sample cell 51 receive the monochrome beams M having smaller scattering angles. Accordingly, an optical intensity detected by means of the photosensors arranged in the rear of the sample cell 51 reflects the quantity of the sample particles having smaller particle diameters while an optical intensity detected by means of the photosensors arranged in the front of the sample cell 51 reflects the quantity of the sample particles having larger particle diameters.

In addition, a part of the monochrome beams M coming out from the aperture 64 of the monochrome emitting means 53 and separated by means of the second beam-splitter 70 is received by the second monitor photosensor 68.

The optical intensities detected by means of the respective photosensors 56a, 56b - - -, 71 are converted into analog electric signals and put in the multiplexer 66 through the amplifiers 65.

Since the wavelength range of the lamp light source 59 is previously selected so as to be shorter than the wavelength of the laser beams L, as above described, the diffracted or scattered monochrome beams M are effective for the determination of the particle size distribution of the sample particles having smaller particle diameters. On the other hand, the diffracted or scattered laser beams L are effective for the detemination of the particle size distribution of the sample particles having larger particle diameters.

The data of measurement sent from the respective photosensors 55a, 55b - - -, 68, 56a, 56b - - -, 71, in short the analog electric signals, are taken in the multiplexer 66 in the appointed order. That is to say, for example, the data of measurement are taken in in the order from the photosensors 56a, 56b - - - corresponding to the sample particles having smaller particle diameters to the photosensors 55a, 55b - - - corrseponding to the sample particles having larger particle diameters.

The analog electric signals taken in the multiplexer 66 are turned into series signals and then converted into digital signals in turn in the A/D convertor 72 on the following stage followed by being put into the operating device 73 on the following stage.

In the operating device 73, a treatment (step S11) of compensating the data measured by means of the ring shaped detector 55 on the basis of the data measured by means of the first monitor photosensor 68 at the same point of measuring time and a treatment (step S12) of compensating the data measured by means of the group of photosensors 56 on the basis of the data measured by the second monitor photosensor 71 at the same point of measuring time are conducted prior to the calculation of the substantial particle size distribution, as shown by a flow chart in Fig. 7. That is to say, the data measured by means of the ring shaped detector 55 are increasedly or decreasedly compensated depending upon an increase or decrease of the quantity of light received by the first monitor photosensor 68, in short a fluctuation of the laser beams L in quantity of light, and the data measured by means of the group of photosensors 56 are increasedly or decreasedly compensated depending upon an increase or decrease of the quantity of light received by the second monitor photosensor 71, in short a fluctuation of the monochrome beams M in quantity of light.

Subsequently, a particle size distribution of the sample particles is determined on the basis of the data of measurement of the respective optical intensities compensated in the above described manner (step S13). This calculating procedure is conducted on the basis of the theory of the Fraunhofer diffraction or the Mie scattering.

And, according to the embodiment of the present invention, the data measured by means of the ring shaped detector measuring the optical intensity of the laser beams diffracted or scattered by the sample particles and the data measured by means of the group of photosensors measuring the optical intensity of the single wavelength beams are compensated by the quantity depending upon the optical intensity of the laser beams and the monochrome beams measured by means of the first monitor photosensor and the second monitor sensor, respectively, at the same point of measuring time and the particle size distribution of the sample particles is calculated by means of the particle size distribution-calculating means on the basis of the compensated data of measurement, so that an effect is obtained in that an accurate particle size distribution can be measured without being influenced by the fluctuation of the light source in quantity of light.

In addition, the data measured by means of the larger particle diameter particle-detecting optical system and the data measured by means of the smaller particle diameter particle-detecting optical system are taken in by means of the data-putting in means together to be used as the data for the particle size distribution-calculating means, so that an effect is obtained also in that the wide range of particle size distribution ranging over from the smaller particle diameters to the larger particle diameters can be simply measured at a single stroke.

### Fig. 7

S11: To compensate the data measured by means of the ring shaped detector on the basis of the data measured by means of the monitor photosensor 68 ; S12: To compensate the data measured by means of the group of photosensors 26 on the basis of the data measured by means of the monitor photosensor 71; S13: To calculate the particle size distribution on the basis of the compensated data:

## Claims

1. An apparatus for measuring a particle size distribution having:
- a large diameter particle-detecting optical system (49) containing laser beam-irradiating means (52) for irradiating a sample vessel (51), in which a medium with sample particles dispersed is housed, with a laser beam (L) and a ring shaped detector (55) for measuring optical intensities of laser beams (L) having the respective scattering angles diffracted or scattered by said sample particles;
- a small particle-detecting optical system (50) containing monochrome light-irradiating means (53) for irradiating said sample vessel (51) with a specified monochrome light (M) taken out from a lamp light source (59) and a group of photosensors (56) for measuring optical intensities of monochrome lights (M) having respective scattering angles diffracted or scattered by the sample particles; and
- operating means (73) for calculating a particle size distribution of the sample particles;
**characterized by**
- a first beam-splitter (67) for separating a part of the laser beam (L) before it is incident upon the sample vessel (51);
- a first monitoring photosensor (68) positioned to measure an optical intensity of the laser beam (L) separated by means of said first beam splitter (67);
- a second beam splitter (70) for separating a part of the monochrome light (M) before it is incident upon the sample vessel (51);
- a second monitoring photosensor (71) positioned to measure an optical intensity of the monochrome light (M) separated by means of said second beam splitter (70);
- a multiplexer (66) taking in the measured data of optical intensity detected by said ring-shaped detector (55) of said large diameter particle-detecting optical system (19), said group of photosensors (56) of the small diameter particle-detecting optical system (50), respectively, in an appointed order, said first monitoring photosensor (68) and said second monitoring photosensor (71), wherein
- said operating means (73) compensates data measured by means of said ring-shaped detector (55) and said group of photosensors (56) depending upon data measured by means of said first and second monitoring photosensors (68, 71) respectively, and
- calculates said particle size distribution from the compensated data of measurement on the basis of the theory of the Fraunhofer diffraction or the Mie scattering.

## Patentansprüche

1. Gerät zum Messen einer Teilchengrößenverteilung, umfassend:
- ein optisches System (49) zum Erfassen von Teilchen mit großem Durchmesser enthaltend eine Laserstrahl-Bestrahlungseinrichtung (52) zum Bestrahlen eines Probengefäßes (51), in welchem ein Medium mit dispergierten Probenteilchen enthalten ist, mit einem Laserstrahl (L) und einem ringförmigen Detektor (55) zum Messen optischer Stärken von Laserstrahlen (L), die die jeweiligen Streuwinkel haben, gebeugt oder gestreut durch die Probenteilchen,
- ein optisches System (50) zum Erfassen kleiner Teilchen, enthaltend eine Bestrahlungseinrichtung (53) für monochromatisches Licht zum Bestrahlen des Probenbehälters (51) mit einem spezifischen monochromatischen Licht (M), das aus einer Lampenlichtquelle (59) genommen ist, und eine Gruppe von Photosensoren (56) zum Messen optischer Stärke von monochromatischen Lichtstrahlen (M), die jeweilige Streuwinkel haben, gebeugt oder gestreut durch die Probenteilchen, und
- eine Betriebseinrichtung (73) zum Berechnen einer Teilchengrößenverteilung der Probenteilchen,
gekennzeichnet durch
- einen ersten Strahlteiler (67) zum Trennen eines Teiles des Laserstrahles (L), bevor dieser auf den Probenbehälter (51) einfällt,
- einen ersten Monitor-Photosensor (68), der positioniert ist, um eine optische Stärke des Laserstrahles (L) zu messen, der mittels des ersten Strahlteilers (67) getrennt ist,
- einen zweiten Strahlteiler (70) zum Trennen eines Teiles des monochromatischen Lichtes (M), bevor dieses auf den Probenbehälter (51) einfällt,
- einen zweiten Monitor-Photosensor (71), der positioniert ist, um eine optische Stärke des monochromatischen Lichtes (M) zu messen, das mittels des zweiten Strahlteilers (70) getrennt ist,
- einen Multiplexer (66) zum Hereinnehmen der Meßdaten der optischen Stärke, erfaßt durch den ringförmigen Detektor (55) des optischen Systems (19) zum Erfassen von Teilchen mit großem Durchmesser bzw. die Gruppe von Photosensoren (56) des optischen Systems (50) zum Erfassen von Teilchen mit kleinem Durchmesser in einer zugewiesenen Reihenfolge, des ersten Monitor-Photosensors (68) und des zweiten Monitor-Photosensors (71), wobei:
- die Betriebseinrichtung (73) die mittels des ringförmigen Detektors (55) und der Gruppe von Photosensoren (56) gemessenen Daten abhängig von den mittels des ersten bzw. zweiten Monitor-Photosensors (68, 71) gemessenen Daten kompensiert und
- die Teilchengrößenverteilung aus den kompensierten Meßdaten auf der Grundlage der Theorie der Fraunhofer-Beugung oder der Mie-Streuung berechnet.

## Revendications

1. Dispositif pour mesurer la distribution de tailles de particules, comportant :
- un système optique (49) de détection de particules de grand diamètre contenant des moyens (52) de rayonnement d'un faisceau laser pour irradier un récipient d'échantillon (51), dans lequel est recu un milieu ayant des particules d'échantillon dispersées, à l'aide d'un faisceau laser (L), et un détecteur en forme d'anneau (55) pour mesurer les intensités optiques de faisceaux laser (L) ayant les angles de dispersion respectifs, diffractés ou dispersés par lesdites particules d'échantillon,
- un système optique (50) de détection de petites particules contenant des moyens (53) de rayonnement de lumière monochrome pour irradier ledit récipient d'échantillon (51) à l'aide d'une lumière monochrome spécifique (M) provenant d'une source (59) de lumière d'une lampe, et un groupe de photodétecteurs (56) pour mesurer les intensités optiques de lumières monochromes (M) ayant des angles de dispersion respectifs, diffractées ou dispersées par les particules d'échantillon, et
- des moyens opérationnels (73) pour calculer une répartition de tailles de particules des particules d'échantillon,
caractérisé en ce qu'il comporte :
- un premier séparateur de faisceau (67) pour séparer une partie du faisceau laser (L) avant qu'il ne vienne frapper le récipient d'échantillon (51),
- un premier photodétecteur de contrôle (68) positionné pour mesurer l'intensité optique du faisceau laser (L) séparé par l'intermédiaire dudit premier séparateur de faisceau (67),
- un second séparateur de faisceau (70) pour séparer une partie de la lumière monochrome (M) avant qu'elle ne vienne frapper le récipient d'échantillon (51),
- un second photodétecteur de surveillance ((71) positionné pour mesurer l'intensité optique de la lumière monochrome (M) séparée par l'intermédiaire du second séparateur de faisceau (70),
- un multiplexeur (66) recevant les données mesurées de l'intensité optique détectée par ledit détecteur en forme d'anneau (55) du système optique (19) de détection de particules de grand diamètre, dudit groupe de photodétecteurs (56) du système optique (50) de détection de particules de petit diamètre, respectivement, dans un ordre désigné, dudit premier photodétecteur de surveillance (68) et dudit second photodétecteur de surveillance (71), dans lequel
- lesdits moyens opérationnels (73) compensent les données mesurées par l'intermédiaire dudit détecteur en forme d'anneau (57) et dudit groupe de photodétecteurs (56) en fonction des données mesurées par l'intermédiaire desdits premier et second photodétecteurs de surveillance (68, 71) respectivement, et
- calculent ladite distribution de tailles de particules à partir des données de mesure compensées sur la base de la théorie de la diffraction de Fraunhofer ou de la dispersion de Mie.
